# EUROPÄISCHE PATENTSCHRIFT

(11) **EP 0 439 062 B1**
(45) Veröffentlichungstag und Bekanntmachung des Hinweises auf die Patenterteilung: **10.11.1993**
(21) Anmeldenummer: 91100542.9
(22) Anmeldetag: 18.01.1991
(51) Int. Cl.: F16B 12/44, F16B 12/10, F16B 12/32

(54) **Profilsystem**
Profile system
Système de profil

(30) Priorität: 20.01.1990 DE 4001594
(43) Veröffentlichungstag der Anmeldung: 31.07.1991
(73) Patentinhaber: Pühringer, Siegfried, 42283 Wuppertal (DE)
(72) Erfinder: Pühringer, Siegfried, 42283 Wuppertal (DE)

(56) Entgegenhaltungen:
- CH-A- 666 729
- DE-B- 2 750 503
- FR-A- 2 336 582
- US-A- 4 021 129

## Beschreibung

Gegenstand der Anmeldung ist ein Profilsystem aus stranggepreßten oder extrudierten Profilen aus Metall oder aus Kunststoff.

Profilsysteme für verschiedene Anwendungen sind bereits in großer Anzahl bekanntgeworden (siehe zum Beispiel das Dokument FR-A-2 336 582). Sie sind in der Regel aus Profilen und mit Verbindern unterschiedlicher Figuration zusammengesetzt.Durch die Vielzahl von Einzelelementen ergibt sich, daß derartige Systeme unhandlich und auch unwirtschaftlich werden. Vor allem für den Heimwerker gibt es Beschaffungsprobleme, da die Einzelelemente oft nur in Mindestlängen und -mengen verfügbar sind, wodurch sich die Versorgung mit den erforderlichen Einzelteilen erheblich verteuert. Dazu kommen auch technische Probleme. Die Erstellung gewünschter Strukturen wie beispielsweise der Bau von Regalen, Gerüsten, Möbeln einfacher geometrischer Formen u. dgl. ist oftmals, wenn überhaupt, nur mit Schwierigkeiten zu bewerkstelligen, da die Einzelelemente überwiegend mehrdimensionaler Formgebung zuge-schnitten und mit Verbindern, meist aus anderem Material wie die Elemente, zusammengefügt werden müssen. Dabei stoßen die erforderlichen Verbindungsverfahren sehr oft an die Grenzen der Machbarkeit durch den durchschnittlichen Heimwerker.

Hier setzt die Erfindung an, der als Aufgabe zu Grunde liegt, ein Profilsystem zu schaffen, das aus Querschnitten einfachster geometrischer Abmessung besteht, wobei Sichtprofile mit U-förmiger Aufnahme zur Anwendung kommen sollen, die mit einfachen Verbindern ohne zusätzliche Maßnahmen wie Bohren, Stanzen, Prägen o. dgl. auskommen.

Zur Lösung der Aufgabe ist vorgesehen, daß das Profilsystem aus U-förmigen Sichtprofilen, als Verbinder ausgebildeten Profilen und aus Klemmelementen besteht, wobei die Flanken des Sichtprofils gegeneinander gerichtete Abkröpfungen aufweisen, die den freien Raum zur positionierenden Aufnahme von Abschnitten der Verbinderprofile, deren freie Schenkel mittels der Klemmelemente festsetzbar sind, einengen. In weiterer Ausgestaltung der Erfindung sind die freien Enden der Flanken des Sichtprofile nach innen abgekröpft und der Raum zwischen den Flanken durch an ihren Innenseiten angeordnete Leisten eingeengt. Der Abstand zwischen den Stegen entspricht der Breite des Verbinders. Der Verbinder kann je nach Einsatzzweck die Form eines Winkels, eines Winkelschenkels, eines T oder eine andere durch Strangpressen herstellbare Form aufweisen, wobei jeweils die freien Enden der Verbinder der Positionierung im Sichtprofil, die Scheitel der Aufnahme benachbarter, mit ihnen zusammenwirkender Verbinder dienen.

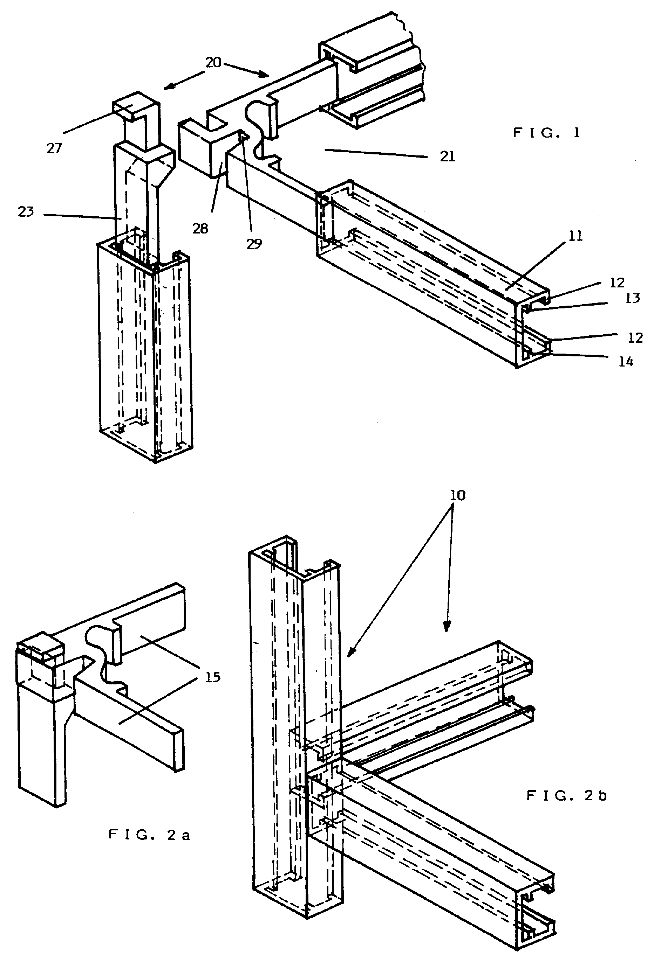

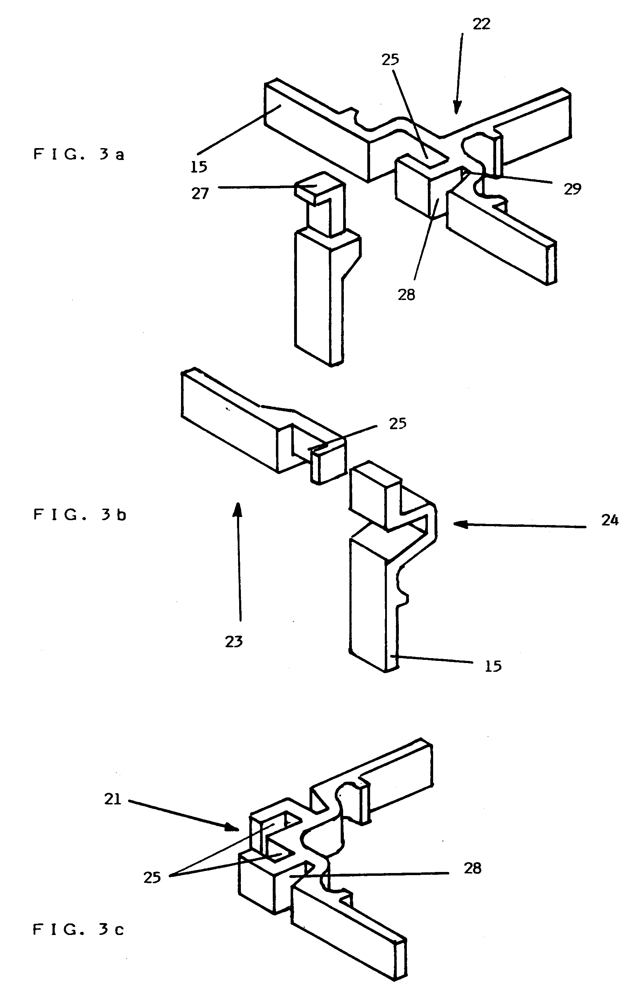

Diese und weitere Merkmale des erfindungsgemäßen Profilsystems werden an hand der Figuren 1-5 beispielsweise beschrieben.

Es zeigen:
- Fig. 1:: Sichtprofile mit eingesetzten Verbindern
- Fig. 2a:: Zusammengesetzter dreidimensionaler Verbinder
- Fig. 2b:: Ansicht einer Profilverbindung
- Fig. 3a:: T-Verbinder mit Schenkel für weitere Dimension
- Fig. 3b:: Verbinder aus Einzelschenkeln
- Fig. 3c:: Verbinder in Winkelform
- Fig. 4:: Klemmschraube mit Stützplatte
- Fig. 5a:: )

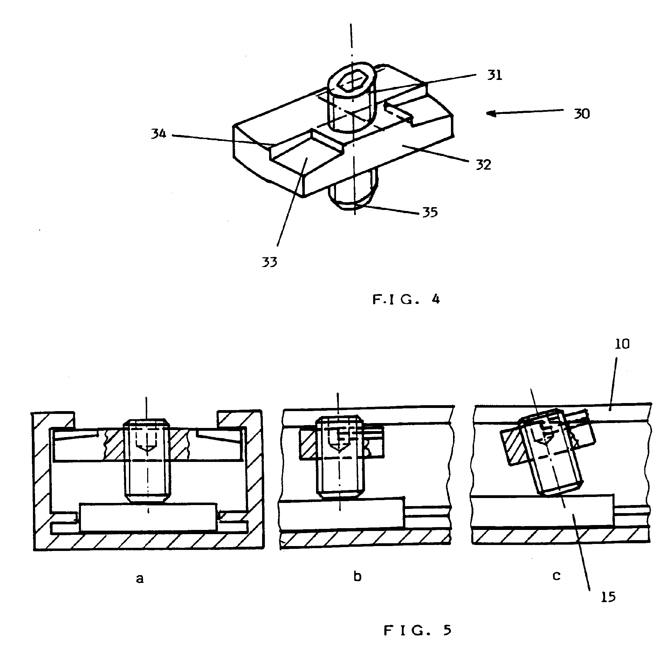

- Fig. 5b:: ) Klemmschraube in verschiedenen Einbauzuständen
- Fig. 5c:: )

Das Profilsystem besteht aus den Sichtprofilen 10, den Verbindern 20 und dem Klemmelement 30. Das Sichtprofil kann aus Metall oder aus Kunststoff durch Strangpressen bzw.Extrusion hergestellt sein. Es ist U-förmig ausgebildet, seine Flanken 11 sind nach innen abgekröpft 12. Der von den Flanken 11 eingeschlossene Raum ist partiell durch die Leisten 13,14 eingeengt. Der Abstand der Leisten 13,14 voneinander entspricht der Breite des Verbinders, der dadurch im eingebauten Zustand stets in der gleichen Lage positioniert wird.

Der Verbinder 20 kann vorteilhafterweise ebenfalls durch Strangpressen oder Extrudieren aus Metall oder Kunststoff hergestellt und von größeren Längen in der erforderlichen Breite durch einen einfachen Sägevorgang abgetrennt sein.Je nach Einsatzzweck kann der Verbinder die Form eines Winkels 21, eines T 22, von Flachverbindern 23,24 oder eine durch Strangpressen herstellbare Form haben. In seinem Scheitelbereich ist der Verbinder mit Nuten 25,26 versehen,die die hakenförmigen Abwinklungen 27 von Einzelschenkeln, die zur Erstellung z.B. dreidimensionaler Systemkonstruktionen erforderlich sind, aufnehmen. Den Nuten 25,26 benachbart sind die Eintiefungen 28, in die beim Einführen des Verbinders in den Hohlraum des Sichtprofils 10 eine dessen Flanken 11 eingreift. Die Breite der Basis 29 der Eintiefung entspricht der Breite der Abkröpfungen 12 des Sichtprofiles. Dadurch und durch die den freien Raum zwischen den Flanken 11 des Sichtprofils 10 einengenden Leisten 13,14, die die freien Enden 15 der Verbinder im Sichtprofil positionieren,wird der genaue Sitz des Verbinders sichergestellt. Die Winkel-und T-Verbinder 21,22 können leicht durch die Flachverbinder 23 ergänzt werden, um auch Konstruktionen, deren Ebene von der der Winkel- oder T-Verbinder abweicht, erstellen zu können. Für den gleichen Einsatz bilden die Flachverbinder 23,24 zusammen einen winkelförmigen Verbinder.

Als besonders vorteilhaft ist anzusehen, daß die Verbinder wahlweise von der Stirnseite oder von der offenen Seite her in das Sichtprofil eingesetzt werden können. Fräs-,Bohr- und Stanzarbeiten jeglicher Art sind so vermeidbar. Erreicht wird dies auch durch das Klemmelement 30. Dieses wird ebenfalls von der offenen Seite des Sichtprofils eingesetzt. Das Klemmelement besteht aus der Stützplatte 32 und der Klemmschraube 31, deren freies Ende 35 gestaucht ist, um einerseits die Schraube gegen Herausdrehen zu sichern und andererseits die Stützplatte in die oder aus der Arbeitslage mitzunehmen (Fig. 5a). Durch Anziehen der Schraube, die sich auf dem freien Ende 15 des Verbinders 20 abstützt (Fig. 5b), stellt sich das Element dank seiner Schrägen 33 in eine Schieflage, wobei es um seine Kante 34 kippt (Fig. 5c). Je nach Position der Kante 34 in der Stützplatte kann der Kippvorgang bzgl. der erreichbaren Schieflage des Elementes und des erforderlichen Drehmomentes beeinflußt werden. Mit zunehmender Kraft graben sich seine scharfen Kanten in den Werkstoff des Sichtprofils ein. Dabei wird eine Relativbewegung zwischen dem freien Schenkel 15 und dem Sichtprofil erzwungen, wodurch sich eine dichte und feste Anlage des Sichtprofils an seinem Nachbarprofil ergibt. Es macht keinerlei Schwierigkeiten, die Verbindung bei Bedarf wieder zu lösen und die zum erfindungsgemäßen Profilsystem gehörenden Teile gegebenenfalls auch anders wieder einzusetzen.

Mit dem Profilsystem ist es gelungen, sowohl dem Fachmann als auch dem weniger geübten Heimwerker Möglichkeiten anzubieten, aus einigen wenigen Teilen vielfältige Konstruktionen wie Regale, Tische, Schränke und vieles andere mehr zu erstellen.

### Stückliste

- 10: Sichtprofil
- 11: Flanke
- 12: Abkröpfung
- 13,14: Leisten
- 15: freie Enden
- 20: Verbinder
- 21: Winkelverbinder
- 22: T - Verbinder
- 23,24: Flachverbinder
- 25,26: Nuten
- 27: Abwinklung
- 28: Eintiefung
- 29: Basis
- 30: Klemmelement
- 31: Klemmschraube
- 32: Stützplatte
- 33: Schräge
- 34: Kante
- 35: freies Ende der Klemmschraube

## Patentansprüche

1. Profilsystem aus stranggepreßten oder extrudierten Profilen aus Metall oder Kunststoff dadurch gekennzeichnet, daß das Profilsystem aus U-förmigen Sichtprofilen (10), als Verbinder ausgebildeten Profilen (20) und aus Klemmelemente (30) besteht, wobei die Flanken (11) des Sichtprofils (10) gegeneinander gerichtete Abkröpfungen (12) aufweisen, die den freien Raum zur positionierenden Aufnahme von Abschnitten der Verbinderprofile (20), deren freie Schenkel mittels der Klemmelemente (30) festsetzbar sind, einengen.

2. Profilsystem nach Anspruch 1 dadurch gekennzeichnet, daß der Verbinder (20) je nach Einsatz die Form eines Winkels (21), eines T (22) oder eines Winkelschenkels (23,24) aufweist, wobei im Scheitel- oder Basisbereich von Winkel oder T Nuten (25,26) zur Aufnahme von mit den Verbindern zusammenwirkenden Verbinderschenkeln (23,L4) angeordnet sind.

3. Profilsystem nach Anspruch 1-2 dadurch gekennzeichnet, daß die Verbinder mit Eintiefungen (28) versehen sind, in die eine der Flanken (11) des Sichtprofils (10) eingreift.

4. Profilsystem nach Anspruch 1-3 dadurch gekennzeichnet, daß das Klemmelement (30) aus einer Klemmschraube (31) und einer Stützplatte (32) besteht,die sich einerseits auf dem freien Ende (15) des Verbinders (20) und andererseits im Sichtprofil abstützen, wobei die Stützplatte (32) partiell abgesetzt (33) ist und sich beim Eindrehen der Klemmschraube (31) um die Kante (34) zwischen ihren abgesetzten und nicht abgesetzten Teilen dreht und sich in die Abkröpfungen (12) eingräbt und eine Relativbewegung zwischen Sichtprofil und Verbinder erzeugt.

5. Profilsystem nach Anspruch 1-4 dadurch gekennzeichnet, daß die Klemmschraube (31) an ihrem freien Ende (35) zur Drehbegrenzung gestaucht ist, wobei die Stauchung die Stützplatte (32) beim Drehen der Klemmschraube in die oder aus der Arbeitslage mitnimmt.

## Claims

1. A profile system made of extruded profiles of metal or plastic, characterised in that the profile system consists of U-shaped visible profiles (10), profiles (20) designed as connectors and clamping elements (30), the flanks (11) of the visible profiles (10) exhibiting bent angles (12) which restrict the free space for holding segments of the connector profiles (20) in position whose free legs can be secured with the clamping element (30).

2. A profile system according to claim 1, characterised in that, depending on the application, the connector (20) has the shape of an angle (21), a T-piece (22) or an angle leg (23,24), whereby slots (25,26) are aranged in the apex or base of the angle or T-piece for accommodating connector legs (23,24) which interact with the connectors.

3. A profile system according to claims 1 to 2, characterised in that the connectors are provided with identations (28) with which one of the flanks (11) of the visible profile (10) engages.

4. A profile system according to claims 1 - 3, characterised in that the clamping element (30) consists of a clamping screw (31) and a support plate (32) which rests, on the one hand, on the free end (15) of the connector (20) and, on the other hand, in the visible profile (10), whereby the support plate (32) is partially sloped (33) and, when the clamping screw (31) is being screwed in, turns about the edge (34) between its sloped and non-sloped parts and digs into the bent angles (12) creating a relative motion between the visible profile and connector.

5. A profile system according to claims 1 - 4, characterised in that the free end (35) of the clamping screw (31) is upset to limit rotation, said upsetting moving the support plate (32) into or out of the working position when the clamping screw is turned.

## Revendications

1. Système de profil constitué de profils extrudés en métal ou en plastique caractérisé en ce que le système de profil constitué de profils apparents en U (10) est composé de profils conçus comme des raccords (20) et d'éléments de serrage (30), les flancs (11) du profil apparent (10) présentant des coudures (12) dirigées les uns contre les autres qui resserrent l'espace libre pour la réception à positionner de sections des profils de raccord (20) dont les côtés libres peuvent être fixés au moyen des éléments de serrage (30).

2. Système de profil suivant la revendication 1, caractérisé en ce que le raccord (20) présente, selon l'emploi, la forme d'un angle (21), d'un T (22) ou d'un côté d'angle (23,24), des rainures (25,26) étant disposées dans la zone du point d'origine ou de la base de l'angle ou du T pour la réception de côtés de raccord (23,24) coopérant avec les raccords.

3. Système de profil suivant la revendication 1 et 2, caractérisé en ce que les raccords sont pourvus d'approfondissements dans lesquelles pénètre un des flancs (11) du profil apparent (10).

4. Système de profil suivant la revendication 1 - 3, caractérisé en ce que l'élément de serrage (30) est composé d'une vis de serrage (31) et d'une plaque d'appui (32) qui s'appuient d'un côté sur l'extrémité libre (15) du raccord (20) et de l'autre côté dans le profil apparent (10), la plaque d'appui (32) étant partiellement décalé (33) et pivotant autour du bord (34) entre ses parties décalées et non décalées lors du vissage de la vis de serrage (31) et se nichant dans les coudures (12) et produisant un mouvement relativ entre le profil apparent et le raccord.

5. Système de profil suivant la revendication 1 - 4, caractérisé en ce que la vis de serrage (31) est refoulée à son extrémité libre (35) pour la limitation de vissage, le refoulement entraînant la plaque d'appui (32) lors du vissage de la vis de serrage dans ou hors de la position de travail.
